# EUROPEAN PATENT SPECIFICATION

(11) **EP 4 459 111 B1**
(45) Date of publication and mention of the grant of the patent: **25.02.2026**
(21) Application number: 23171412.2
(22) Date of filing: 03.05.2023
(51) Int. Cl.: F01P 11/02, F01P 7/14

(54) **THERMAL MANAGEMENT SYSTEM FOR A VEHICLE, VEHICLE COMPRISING A THERMAL MANAGEMENT SYSTEM, USE OF A THERMAL MANAGEMENT SYSTEM, METHOD FOR CONTROLLING A THERMAL MANAGEMENT SYSTEM AND COMPUTER PROGRAM ELEMENT**
WÄRMEMANAGEMENTSYSTEM FÜR EIN FAHRZEUG, FAHRZEUG MIT WÄRMEMANAGEMENTSYSTEM, VERWENDUNG EINES WÄRMEMANAGEMENTSYSTEMS, VERFAHREN ZUR STEUERUNG EINES WÄRMEMANAGEMENTSYSTEMS UND COMPUTERPROGRAMMELEMENT
SYSTÈME DE GESTION THERMIQUE POUR UN VÉHICULE, VÉHICULE COMPRENANT UN SYSTÈME DE GESTION THERMIQUE, UTILISATION D'UN SYSTÈME DE GESTION THERMIQUE

(43) Date of publication of application: 06.11.2024
(73) Proprietor: Volvo Car Corporation, 405 31 Göteborg (SE)
(72) Inventor: HALLDIN, Morgan, 40531 Göteborg (SE); HERMANSON, Jesper, 40531 Göteborg (SE)
(74) Representative: Maiwald GmbH

(56) References cited:
- DE-A1- 3 943 506
- DE-T5- 112010 005 371
- FR-A1- 2 832 186
- FR-A1- 2 905 737
- US-B2- 11 230 962

## Description

The present disclosure relates to a thermal management system for a vehicle, a vehicle comprising a thermal management system, use of a thermal management system for a flow and/or pressure balancing system of a vehicle, a method for controlling a thermal management system for a vehicle and a computer program element for a thermal management system.

In the modern vehicle industry, in particular in the battery electric vehicles, energy efficiency becomes an increasingly important factor while travelling. An energy efficient and compact thermal management system as well as a solution to couple valves which may connect heat sources in an efficient way are desired. DE 39 43 506 A1 describes a ventilation line of a heat exchanger, in particular a heating heat exchanger in the engine cooling circuit of a motor vehicle, which is led from a high point in a flow water tank to an expansion tank and ends there below the liquid level. US 11 230 962 B2 describes a reservoir tank with an integrated ejector, in particular a tank body having a space, in which a coolant and a gas are contained, and an ejector integrally coupled to the tank body. The ejector is configured to cool the gas produced from a gas source using the coolant contained in the tank body before the gas flows into the tank body.

It is an objective of the present disclosure to provide an improved thermal management system for a vehicle.

The problem is at least partially solved or alleviated by the subject matter of the independent claims of the present disclosure, wherein further examples are incorporated in the dependent claims.

According to a first aspect, there is provided a thermal management system for a vehicle according to claim 1.

The limit level of the degassing tank may be a predefined limit level of the degassing tank. And the first distance from the filling port of the filling pipe may be a first predefined distance from the filling port of the filling pipe.

The at least one degassing pipe may comprise one or more degassing pipes, for example two degassing pipes, namely a first degassing pipe and a second degassing pipe. For example, the two degassing pipes may be connected, respectively, to a certain thermal circuit which may comprise a radiator or electric drive components.

For example, the predefined limit level of the degassing tank or expansion tank may be a minimum filling level of the degassing tank. Regardless of the arrangement of the at least one connecting port at the side wall of the degassing tank for connecting the at least one degassing pipe, the at least one degassing pipe may end inside the degassing tank below the minimum filling level, in order to reduce risk of sucking in air at any driving condition of the vehicle.

Moreover, with the first predefined distance between the at least one degassing pipe end and the filling port of the filling pipe, the at least one degassing pipe, in particular the at least one degassing pipe end, may be placed distantly or far away from the filling line, so that no air will be sucked down into any of the at least one degassing pipe at any driving condition of the vehicle.

It may be provided that the degassing tank may be divided into a plurality of sections where the degassing process and the filling process may be separated from each other, so that the air may have time to be evacuated or degassed to the surface of the filling fluid inside the tank before the filling fluid may exit the tank.

According to an example, the filling pipe may comprise a larger dimension than the at least one degassing pipe.

For example, the dimension of the filing pipe may be a diameter, a radius or a further size parameter of the filing pipe. For example, the filling pipe may comprise an inner diameter of 8 to 30 mm, preferably 10 to 20 mm, more preferably 16 mm. In contrast, one of the degassing lines may comprise an inner diameter of 4 to 12 mm, preferably 6 to 8 mm, while the other degassing line may comprise an inner diameter of 1 to 8 mm, preferably 2 to 4 mm.

The large dimension of the filling pipe may advantageously enable or optimize the filling efficiency and/or the filling rate of the filling fluid into the degassing tank.

According to another example, the at least one degassing pipe may comprise a first degassing pipe, which may comprise a first degassing pipe end, and a second degassing pipe, which may comprise a second degassing pipe end.

The first degassing pipe may be connected to the degassing tank by means of the first connecting port. Alternatively or additionally, the second degassing pipe may be connected to the degassing tank by means of the second connecting port.

According to another example, the degassing tank may comprise the first connecting port and/or the second connecting port. The first connecting port and/or the second connecting port may be arranged in the top region and/or in the bottom region of the side wall of the degassing tank.

According to another example, the first degassing pipe end may be arranged at a second distance from the second degassing pipe end.

A second distance from the second degassing pipe end may be a second predefined distance from the second degassing pipe end.

The first degassing pipe end and the second degassing pipe end may be arranged distantly or far away from each other, for example, in order to prevent the first and second degassing pipes from sucking down any air in the tank into the thermal management system. In addition, with the second predefined distance arranged between the first and second degassing pipe ends, the flow in the vicinity of the first and second degassing pipe ends may be prevented from a potential flow interference or flow turbulence. As a result, the flow in each of the first and second degassing pipes may be controlled, respectively, at a flow rate or a predefined flow rate.

According to another example, the first connecting port and the second connecting port may be arranged on the same side of the side wall of the degassing tank. Further, the first connecting port may be arranged at a lower position at the side wall than the second connecting port.

In other words, the first connecting port and the second connecting port may be arranged, respectively, at a different height of the same side wall of the degassing tank.

According to another example, the second connecting port may be arranged on an opposite side of the side wall to the first connecting port. Alternatively or additionally, the first connecting port may be arranged at a lower or higher position at the side wall than the second connecting port.

Accordingly, the first connecting port and the second connecting port may be arranged to be distant from each other in both lateral and vertical directions. As such, the first connecting port and the second connecting port may have different heights and different lateral positions at the side wall of the degassing tank. Alternatively, the first connecting port and the second connecting port may be arranged at the same height but at a different side or at the opposite sides of the side wall of the degassing tank.

The first connecting port and the second connecting port may be placed far away, for example at least approximately 5 cm, from each other to prevent air suction into the first and second degassing pipes.

According to the invention, the thermal management system further comprises at least one restriction unit, which is arranged along the at least one degassing pipe. The at least one restriction unit is configured to restrict at least one degassing flow inside the at least one degassing pipe at a predefined degassing flow rate by setting a dimension of the restriction.

The degassing flow rate may be a predefined degassing flow rate.

Further, the at least one restriction unit may be configured to adjust in a correct way to balance the flow through the degassing tank and at the same time to adjust the pressure to the inlet of a pumping system that may be connected to the at least one degassing pipe and/or the filling pipe.

It may be provided that, if two degassing pipes, namely the first degassing pipe and the second degassing pipe are arranged for the thermal management system, only one restriction unit may be arranged along one of the two degassing pipes. While the degassing flow rate inside the degassing pipe without the restriction unit may remain at a certain degassing flow rate, the degassing flow rate inside the degassing pipe with the restriction unit may be varied by setting or adapting the dimension of the restriction depending on the pressure inside the degassing tank, the filling rate inside the filling pipe and/or the degassing flow rate inside the other degassing pipe without the restriction unit.

Alternatively, each of the first and second degassing pipes may be provided with a separate restriction unit. As such, the at least one restriction unit may comprise for example two restriction units, namely a first restriction unit for the first degassing pipe and a second restriction unit for the second degassing pipe. The degassing flow inside the first and second degassing pipes may be restricted, respectively, at different degassing flow rates by separately setting the dimensions of the first and second restriction units.

According to the invention, the thermal management system further comprises a control unit, which is configured to control the at least one restriction unit and to adjust the dimension of the restriction, so that the at least one degassing flow inside the at least one degassing pipe varies depending on a filling flow rate of the filling pipe and/or a gas pressure inside the degassing tank and/or a pressure to an inlet of a pumping system being connected to the at least one degassing pipe and/or the filling pipe.

While the filling pipe may be connected to the pumping system that may be electrically connected to and driven by a battery system comprising battery circuit components, the first degassing pipe may be connected to the electric drive components that may be provided in the thermal circuit and the second degassing pipe may be connected to the radiator provided in the thermal circuit. The radiator and the electric drive components may be arranged in two separate sections or paths of the thermal circuit. Further, valves may be arranged in the thermal circuit.

With the thermal circuit having multiple thermal paths connected to the expansion tank or the degassing tank via the first and second degassing pipes and the filling pipe, the degassing and filling flows may vary depending on the control unit, the restriction units and/or the valve setting. As such, the degassing solution for the thermal management of the vehicle may be improved with efficient and effective degassing and filling controls in combination with not creating critical pressure levels for the pumping system and leakage that may cause drop in energy efficiency.

According to a second aspect, there is provided a vehicle that comprises a thermal management system according to the present disclosure.

According to a third aspect, there is provided a use of a thermal management system according to the present disclosure for a flow and/or pressure balancing system of a vehicle according to the present disclosure.

The thermal management system having, for example, two degassing pipes and one filling line, may be configured be create a beneficial pressure situation depending on parameters, such as the location of the connecting ports and/or the degassing pipe ends of the degassing pipes as well as dimensions of one or more restriction units arranged along the at least one degassing pipes.

As a result, the thermal management system may be improved with an optimized degassing efficiency and reliability as well as a well-balanced degassing and filling of the degassing tank. Further, by arranging the first and second degassing pipes and their ends relative to each other and to the filling pipe and by arranging the at least one restriction unit being able to be controlled by the control unit, the thermal management system may provide effective thermal expansion from all circuits in all valve configurations. In particular, the thermal management system according to the present disclosure may be adjusted, so that the thermal management system and the connected thermal circuit of the vehicle may not risk cavitation at high enough pressure in front of the pumping system and may not be overengineered with the ingoing components at low enough pressure in the systems. Additionally, the energy efficiency may be increased with low enough leakage in the thermal management system.

According to a fourth aspect, there is provided a method for controlling a thermal management system for a vehicle according to claim 10. The method comprises the following steps: first, connecting at least one degassing pipe comprising at least one degassing pipe end to a degassing tank by means of at least one connecting port, which are arranged at a side wall of the degassing tank; subsequently, connecting a filling pipe to the degassing tank by means of a filling port, which is arranged at the bottom of the degassing tank; finally, arranging the at least one degassing pipe end below a limit level of the degassing tank as a minimum filling level, in order to reduce risk of sucking in air into the degassing tank, and at a first distance from the filling port of the filling pipe, so that no air is to be sucked down into the at least one degassing pipe.

According to an example, the method may further comprise the following steps: arranging the second connecting port on the same side as or on an opposite side to the first connecting port at the side wall of the degassing tank; providing the at least one degassing pipe with a first degassing pipe that may comprise a first degassing pipe end and a second degassing pipe that may comprise a second degassing pipe end; connecting the first degassing pipe to the degassing tank by means of the first connecting port, and/or connecting the second degassing pipe to the degassing tank by means of the second connecting port; and arranging the first degassing pipe end at a second distance from the second degassing pipe end.

According to another example, the method may further comprise the following steps: arranging at least one restriction unit along the at least one degassing pipe and controlling the at least one restriction unit by means of a control unit and adjusting the dimension of the restriction, so that the at least one degassing flow inside the at least one degassing pipe may vary depending on a filling flow rate of the filling pipe and/or a gas pressure inside the degassing tank and/or a pressure to an inlet of a pumping system being connected to the at least one degassing pipe and/or the filling pipe.

According to a fifth aspect, there is provided a computer program element for a thermal management system according to the present disclosure, which, when being executed by a processing element of a vehicle, is adapted to perform the method steps of the fourth aspect.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Fig. 1: shows schematically an example of a thermal management system according to the present disclosure.
- Fig. 2: shows schematically an example of a thermal management system according to the present disclosure.
- Fig. 3a: shows schematically an example of a thermal management system according to the present disclosure.
- Fig. 3b: shows a graph illustrating current signals of a thermal management system according to the present disclosure.
- Fig. 4: shows schematically an example of a vehicle according to the present disclosure.
- Fig. 5: shows schematically a flow chart illustrating a method for evaluating an impedance of a battery system for a vehicle according to the present disclosure.

The figures are merely schematic representations and serve only to illustrate examples of the disclosure. Identical or equivalent elements are in principle provided with the same reference signs.

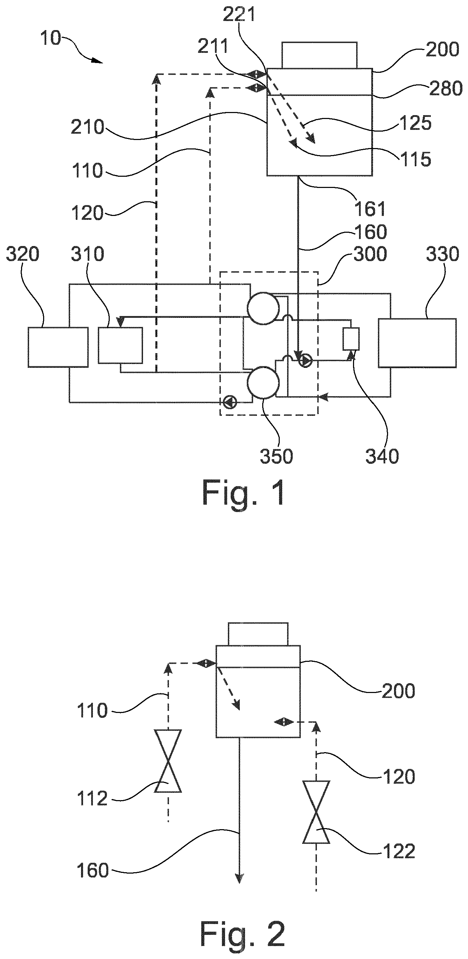

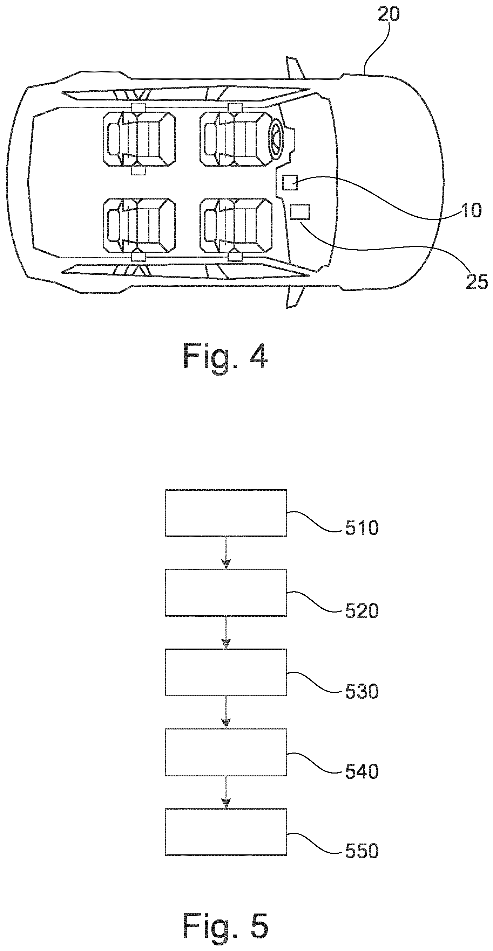

Figure 1 shows a thermal management system 10 for a vehicle 20, which may be an electric vehicle in the present example (as shown in Fig. 4). The thermal management system 100 comprises at least one degassing pipe, in particular, a first degassing pipe 110 and a second degassing pipe 120, and a filling pipe 160.

The first degassing pipe 110 may be connected to an expansion tank or a degassing tank 200 by means of a first connecting port 211, and the second degassing pipe 110 may be connected to the degassing tank 200 by means of a second connecting port 221. Both the first and the second connecting ports 211, 221 are arranged at a side wall 210 of the degassing tank 200.

The filling pipe 160 may be connected to the degassing tank 200 via a filling port 161, which may be arranged at the bottom of the degassing tank 200. The filling pipe 160 may also be connected to a pumping system 300, which may be driven by a connected battery system 330.

The first degassing pipe 110 comprises a first degassing pipe end 115, and the second degassing pipe 120 comprises a second degassing pipe end 125. The first degassing pipe 100 and the second degassing pipe 120 are connected to the degassing tank 200, respectively, by means of the first connecting port 211 and the second connecting port 221. The at least one degassing pipes 110, 120 may also be connected, respectively, to different paths of the thermal circuit of the vehicle. For example, two paths of the thermal circuit may be provided, respectively, with a radiator 310 or electric drive components 320. The thermal circuit may further comprise a chiller 340, which may use a coolant to remove heat of the thermal circuit and the thermal management system, and a plurality of valves 350 for regulating the paths of the thermal circuit.

The first and second degassing pipes 115, 125 are both arranged below a predefined limit level 280, which may be a minimum filling level of the degassing tank 200. Regardless of the arrangement of the first and second connecting ports 211, 221 at the side wall 210 of the degassing tank 200, the first and second degassing pipes 110, 120 may end inside the degassing tank 200 below the minimum filling level 280, in order to reduce any risk of sucking in air at any driving condition of the vehicle 20.

Additionally, the first and the second degassing pipe ends 115, 225 may be arranged at a first predefined distance from the filling port 161 of the filling pipe 160. As such, the first and second degassing pipe ends 115, 125 may be placed distantly or far away from the filling line 160, so that air may not be sucked down into any of the first and second degassing pipes 110, 120 at any driving condition of the vehicle.

Alternatively, it may be provided that the degassing tank 200 may be divided into a plurality of sections (not shown) where the degassing process and the filling process may be separated from each other, so that the air may have time to be evacuated or degassed to the surface of the filling fluid inside the tank before the filling fluid may exit the tank 200.

The filling pipe 160 may comprise a larger dimension than the first and second degassing pipes 110, 120. For example, the filling pipe 160 may comprise an inner diameter of 8 to 30 mm, preferably 10 to 20 mm, more preferably 16 mm. In contrast, one of the degassing lines 110, 120 may comprise an inner diameter of 4 to 12 mm, preferably 6 to 8 mm, while the other degassing line may comprise an inner diameter of 1 to 8 mm, preferably 2 to 4 mm. The large dimension of the filling pipe 160 may advantageously enable or optimize the filling efficiency and/or the filling rate of the filling fluid into the degassing tank 200.

As shown in Figure 1, the first connecting port 211 and the second connecting port 221 may be arranged in the top region and/or in the bottom region of the side wall 210 of the degassing tank 200. Further, the first connecting port 211 and the second connecting port 221 are arranged on the same side of the side wall 210 of the tank 200. The first connecting port 211 is arranged at a lower position at the side wall 210 than the second connecting port 221. In other words, the first and second connecting ports 211, 221 are arranged at different heights along the same side of the side wall 210.

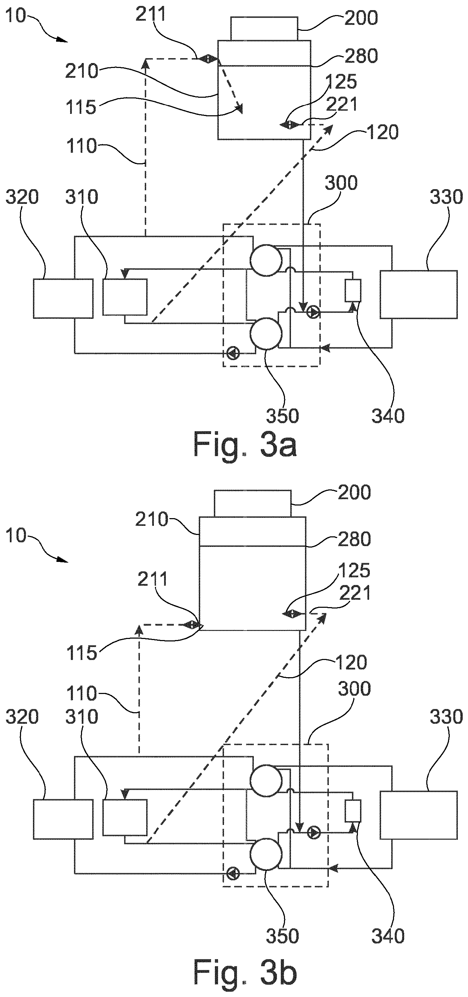

As a comparison, as shown in Figure 2, Figure 3a and Figure 3b, the first connecting port 211 and/or the second connecting port 221 may be arranged in the top region or in the bottom region of the side wall 210 of the degassing tank 200. In particular, in Figure 3a, the first connecting port 211 is arranged in the top region, while the second connecting port 221 is arranged in the bottom region. Figure 3b shows that both the first and second connecting ports 211, 221 are arranged in the bottom region.

Figure 3a and Figure 3b show, respectively, that the second connecting port 221 is arranged on a different lateral position or on an opposite side of the side wall 210 to the first connecting port 211. Additionally, the first connecting port 211 may be arranged at a higher position, as shown in Figure 3a, or lower position, as shown in Figure 3b, at the side wall 210 than the second connecting port 221.

In general, the first degassing pipe end 115 may be arranged at a second predefined distance from the second degassing pipe end 125. The first and second degassing pipe ends 115, 125 may be arranged distantly or far away from each other, for example at least approximately 5 cm, in order to prevent the first and second degassing pipes 110, 120 from sucking down any air in the tank into the thermal management system 10. In addition, with the second predefined distance arranged between the first and second degassing pipe ends 115, 125, the flow in the vicinity of the first and second degassing pipe ends 115, 125 may be prevented from a potential flow interference or flow turbulence. As a result, the flow in each of the first and second degassing pipes 110, 120 may be controlled, respectively, at a predefined flow rate.

Fig. 2 shows a further example of a thermal management system 100, which further comprises at least one restriction unit, in particular, a first restriction unit 112 and a second restriction unit 122. The first restriction unit 112 and the second restriction unit 122 are arranged, respectively, along the first degassing pipe 110 and the second degassing pipe 120.

The first restriction unit 112 and the second restriction unit 122 comprises, respectively, an adjustable or predefined dimension of the restriction, and are configured to restrict, respectively, the degassing flows inside each degassing pipe 110, 120, at a respective degassing flow rate by setting the dimension of the restriction. In this way, the first and second restriction units 112, 122 may be configured to adjust in a correct way to balance the flow through the degassing tank 200 and at the same time to adjust the pressure to the inlet of the pumping system 300 connected to the filling pipe 160.

Moreover, the thermal management system 10 may further comprises a control unit (not shown), which may be configured to control the first and/or second restriction units 112, 122 and to adjust the dimension of the restriction, so that the degassing flows inside the degassing pipes 110, 120 may vary depending on a filling flow rate of the filling pipe 160 and/or a gas pressure inside the degassing tank 200 and/or a pressure to an inlet of a pumping system 300.

By controlling the thermal management system 10 and the thermal circuit using the control unit, the restriction units 112, 122 and/or the valve settings along the paths of the thermal circuit, the degassing solution for the thermal management of the vehicle may be improved with efficient and effective degassing and filling controls in combination with not creating critical pressure levels for the pumping system 300 and leakage that may cause drop in energy efficiency.

Fig. 4 shows the vehicle 20 that comprises a thermal management system 10 according to the present disclosure and a processing element 25, which may be designed to execute a computer program element for the thermal management system 10 for performing method steps as shown in Fig. 5.

Fig. 5 shows a flow chart illustrating a method for controlling a thermal management system 10 for a vehicle 20. The method starts at step 510 where at least one degassing pipe 110, 120 comprising at least one degassing pipe end 115, 125 is connected to a degassing tank 200 by means of at least one connecting port 211, 221. The at least one connecting port 211, 221 is arranged at a side wall 210 of the degassing tank 200.

At a subsequent step 520, a filling pipe 160 is connected to the degassing tank 200 by means of a filling port 161, which is arranged at the bottom 260 of the degassing tank 200.

At a further step 530, the at least one degassing pipe end 115, 125 is arranged below a predefined limit level 280 of the degassing tank 200 and at a first predefined distance from the filling port 161 of the filling pipe 160.

The second connecting port 221 may be arranged on the same side as or on an opposite side to the first connecting port 211 at the side wall 210 of the degassing tank 200. It may be provided that the at least one degassing pipe 110, 120 may have a first degassing pipe 110, comprising a first degassing pipe end 115, and a second degassing pipe 120, comprising a second degassing pipe end 125. Further, the first degassing pipe 110 may be connected to the degassing tank 200 by means of the first connecting port 211, and/or the second degassing pipe 120 may be connected to the degassing tank 200 by means of the second connecting port 221.

At a further step 540, the first degassing pipe end 115 may be arranged at a second distance or a second predefined distance from the second degassing pipe end 125.

Furthermore, at least one restriction unit 112, 122 may be arranged along the at least one degassing pipe 110, 120.

At a further step 550, the at least one restriction unit 112, 122 may be controlled by means of a control unit and the dimension of the restriction may be adjusted, so that the at least one degassing flow inside the at least one degassing pipe 110, 120 may vary depending on a filling flow rate of the filling pipe 160 and/or a gas pressure inside the degassing tank 200 and/or a pressure to an inlet of a pump 300 being connected to the at least one degassing pipe 110, 120.

### LIST OF REFERENCE SIGNS

- 10: thermal management system
- 20: vehicle
- 25: processing element
- 110: first degassing pipe
- 115: first degassing pipe end
- 120: second degassing pipe
- 125: second degassing pipe end
- 160: filling pipe
- 161: filing port
- 200: degassing tank
- 210: side wall
- 211: first connecting port
- 221: second connecting port
- 280: limit level
- 300: pumping system
- 310: radiator
- 320: electric drive components
- 330: battery system
- 340: chiller
- 350: valve
- 510: step of connecting at least one degassing pipe to degassing tank
- 520: step of connecting filling pipe to degassing tank
- 530: step of arranging at least one degassing pipe end below a limit level
- 540: step of arranging first degassing pipe end at a second distance from second degassing pipe end
- 550: step of controlling at least one restriction unit by means of control unit

## Claims

1. A thermal management system (10) for a vehicle (20), comprising:
at least one degassing pipe (110, 120) comprising at least one degassing pipe end (115, 125),
a filling pipe (160);
at least one restriction unit (112, 122); and
a control unit;
the at least one degassing pipe (110, 120) being connected to a degassing tank (200) by means of at least one connecting port (211, 221), the at least one connecting port (211, 221) being arranged at a side wall (210) of the degassing tank (200);
the filling pipe (160) being connected to the degassing tank (200) by means of a filling port (161), the filling port (161) being arranged at the bottom of the degassing tank (200);
the at least one degassing pipe end (115, 125) being arranged below a limit level (280) of the degassing tank (200) as a minimum filling level, in order to reduce risk of sucking in air into the degassing tank (200); and
the at least one degassing pipe end (115, 125) being arranged at a first distance from the filling port (161) of the filling pipe (160), so that no air is to be sucked down into the at least one degassing pipe (110, 120);
the at least one restriction unit (112, 122) being arranged along the at least one degassing pipe (110, 120);
the at least one restriction unit (112, 122) being configured to restrict at least one degassing flow inside the at least one degassing pipe at a degassing flow rate by setting a dimension of the restriction; and **characterized in that**
the control unit being configured to control the at least one restriction unit (112, 122) and to adjust the dimension of the restriction, so that the at least one degassing flow inside the at least one degassing pipe (110, 120) varies depending on a filling flow rate of the filling pipe (160) and/or a gas pressure inside the degassing tank (200) and/or a pressure to an inlet of a pumping system (300) being connected to the at least one degassing pipe (110, 120) and/or the filling pipe (160).

2. The thermal management system (10) according to claim 1,
the filling pipe (160) comprising a larger dimension than the at least one degassing pipe (110, 120).

3. The thermal management system (10) according to claim 1 or 2,
the at least one degassing pipe (110, 120) comprising:
a first degassing pipe (110) comprising a first degassing pipe end (115), and
a second degassing pipe (120) comprising a second degassing pipe end (125);
the first degassing pipe (110) being connected to the degassing tank (200) by means of the first connecting port (211); and/or
the second degassing pipe (120) being connected to the degassing tank (200) by means of the second connecting port (221).

4. The thermal management system (10) according to claim 3, further comprising:
the degassing tank (200) comprising the first connecting port (211) and/or the second connecting port (221);
the first connecting port (211) and/or the second connecting port (221) are arranged in
the top region and/or the bottom region of the side wall (210) of the degassing tank (200).

5. The thermal management system (10) according to claim 3 or 4,
the first degassing pipe end (115) being arranged at a second distance from the second degassing pipe end (125).

6. The thermal management system (10) according to claim 4 or 5,
the first connecting port (211) and the second connecting port (221) being arranged on the same side of the side wall (210) of the degassing tank (200); and
the first connecting port (211) being arranged at a lower position at the side wall (210) than the second connecting port (221).

7. The thermal management system (10) according to claim 4 or 5,
the second connecting port (221) being arranged on an opposite side of the side wall (210) to the first connecting port (211); and/or
the first connecting port (211) being arranged at a lower or higher position at the side wall (210) than the second connecting port (221).

8. A vehicle (20) comprising a thermal management system (10) according to one of the preceding claims 1 to 7.

9. Use of a thermal management system (10) according to one of the preceding claims 1 to 7 for a flow and/or pressure balancing system of a vehicle (20) according to claim 8.

10. A method for controlling a thermal management system (10) for a vehicle (20) according to one of claims 1 to 7, comprising the steps of:
connecting (510) at least one degassing pipe (110, 120) comprising at least one degassing pipe end (115, 125) to a degassing tank (200) by means of at least one connecting port (211, 221), the at least one connecting port (211, 221) being arranged at a side wall (210) of the degassing tank (200);
connecting (520) a filling pipe (160) to the degassing tank (200) by means of a filling port (161), the filling port (161) being arranged at the bottom (260) of the degassing tank (200);
arranging (530) the at least one degassing pipe end (115, 125) below a limit level (280) of the degassing tank (200) as a minimum filling level, in order to reduce risk of sucking in air into the degassing tank (200), and at a first distance from the filling port (161) of the filling pipe (160), so that no air is to be sucked down into the at least one degassing pipe (110, 120);
arranging at least one restriction unit (112, 122) along the at least one degassing pipe (110, 120);
the at least one restriction unit (112, 122) being configured to restrict at least one degassing flow inside the at least one degassing pipe at a degassing flow rate by setting a dimension of the restriction;
controlling the at least one restriction unit (112, 122) by means of a control unit and adjusting the dimension of the restriction, so that the at least one degassing flow inside the at least one degassing pipe (110, 120) varies depending on a filling flow rate of the filling pipe (160) and/or a gas pressure inside the degassing tank (200) and/or a pressure to an inlet of a pumping system (300) being connected to the at least one degassing pipe (110, 120) and/or the filling pipe (160).

11. The method according to claim 10, further comprising the steps of:
arranging the second connecting port (221) on the same side as or on an opposite side to the first connecting port (211) at the side wall (210) of the degassing tank (200);
providing the at least one degassing pipe (110, 120) with a first degassing pipe (110) comprising a first degassing pipe end (115) and a second degassing pipe (120) comprising a second degassing pipe end (125);
connecting the first degassing pipe (110) to the degassing tank (200) by means of the first connecting port (211), and/or connecting the second degassing pipe (120) to the degassing tank (200) by means of the second connecting port (221); and
arranging (540) the first degassing pipe end (115) at a second distance from the second degassing pipe end (125).

12. A computer program element for a thermal management system (10) according to any of claims 1 to 7, which, when being executed by a processing element (25) of a vehicle (20), being adapted to perform the method steps of one of the method claims 10 to 11.

## Patentansprüche

1. Ein Thermomanagementsystem (10) für ein Fahrzeug (20), umfassend:
mindestens ein Entgasungsrohr (110, 120) umfassend mindestens einem Entgasungsrohrende (115, 125),
ein Füllrohr (160);
mindestens eine Drosseleinheit (112, 122); und
eine Steuereinheit;
wobei das mindestens eine Entgasungsrohr (110, 120) mittels mindestens eines Anschlussstutzens (211, 221) mit einem Entgasungsbehälter (200) verbunden ist, wobei der mindestens eine Anschlussstutzen (211, 221) an einer Seitenwand (210) des Entgasungsbehälters (200) angeordnet ist;
wobei das Füllrohr (160) mittels eines Füllstutzens (161) mit dem Entgasungsbehälter (200) verbunden ist, wobei der Füllstutzen (161) am Boden des Entgasungsbehälters (200) angeordnet ist;
wobei das mindestens eine Entgasungsrohrende (115, 125) unterhalb eines Grenzpegels (280) des Entgasungsbehälters (200) als Mindestfüllstand angeordnet ist, um das Risiko des Ansaugens von Luft in den Entgasungsbehälter (200) zu verringern; und
wobei das mindestens eine Entgasungsrohrende (115, 125) in einem ersten Abstand vom Füllstutzen (161) des Füllrohrs (160) angeordnet ist, so dass keine Luft in das mindestens eine Entgasungsrohr (110, 120) angesaugt wird;
wobei die mindestens eine Drosseleinheit (112, 122) entlang des mindestens einen Entgasungsrohrs (110, 120) angeordnet ist; wobei die mindestens eine Drosseleinheit (112, 122) dazu eingerichtet ist, mindestens einen Entgasungsstrom im mindestens einen Entgasungsrohr bei einer Entgasungsdurchflussrate durch Festlegen einer Dimension der Drosselung zu begrenzen; und **dadurch gekennzeichnet, dass** die Steuereinheit dazu eingerichtet ist, die mindestens eine Drosseleinheit (112, 122) zu steuern und die Dimension der Drosselung anzupassen, so dass der mindestens eine Entgasungsstrom im mindestens einen Entgasungsrohr (110, 120) in Abhängigkeit von einer Füllstromrate des Füllrohrs (160) und/oder einem Gasdruck im Entgasungsbehälter (200) und/oder einem Druck an einem Einlass eines mit dem mindestens einen Entgasungsrohr (110, 120) und/oder dem Füllrohr (160) verbundenen Pumpensystems (300) variiert.

2. Das Thermomanagementsystem (10) nach Anspruch 1, wobei das Füllrohr (160) eine größere Dimension als das mindestens eine Entgasungsrohr (110, 120) aufweist.

3. Das Thermomanagementsystem (10) nach Anspruch 1 oder 2, wobei das mindestens eine Entgasungsrohr (110, 120) umfasst:
ein erstes Entgasungsrohr (110) mit einem ersten Entgasungsrohrende (115), und
ein zweites Entgasungsrohr (120) mit einem zweiten Entgasungsrohrende (125);
wobei das erste Entgasungsrohr (110) mittels des ersten Anschlussstutzens (211) mit dem Entgasungsbehälter (200) verbunden ist; und/oder
wobei das zweite Entgasungsrohr (120) mittels des zweiten Anschlussstutzens (221) mit dem Entgasungsbehälter (200) verbunden ist).

4. Das Thermomanagementsystem (10) nach Anspruch 3, weiterhin umfassend:
den Entgasungsbehälter (200), der den ersten Anschlussstutzen (211) und/oder
den zweiten Anschlussstutzen (221) umfasst;
wobei der erste Anschlussstutzen (211) und/oder der zweite Anschlussstutzen (221) im oberen Bereich und/oder im unteren Bereich der Seitenwand (210) des Entgasungsbehälters (200) angeordnet sind.

5. Das Thermomanagementsystem (10) nach Anspruch 3 oder 4, wobei das erste Entgasungsrohrende (115) in einem zweiten Abstand vom zweiten Entgasungsrohrende (125) angeordnet ist.

6. Das Thermomanagementsystem (10) nach Anspruch 4 oder 5,
wobei der erste Anschlussstutzen (211) und der zweite Anschlussstutzen (221) an derselben Seite der Seitenwand (210) des Entgasungsbehälters (200) angeordnet sind; und
wobei der erste Anschlussstutzen (211) weiter unten angeordnet ist als der zweite Anschluss (221).

7. Das Thermomanagementsystem (10) nach Anspruch 4 oder 5,
wobei der zweite Anschlussstutzen (221) an einer gegenüberliegenden Seite der Seitenwand (210) zum ersten Anschlussstutzen (211) angeordnet ist; und/oder
wobei der erste Anschluss (211) an der Seitenwand (210) weiter unten oder weiter oben angeordnet ist als der zweite Anschluss (221).

8. Fahrzeug (20), umfassend ein Thermomanagementsystem (10) nach einem der vorhergehenden Ansprüche 1 bis 7.

9. Verwendung eines Thermomanagementsystems (10) nach einem der vorhergehenden Ansprüche 1 bis 7 für ein Durchfluss- und/oder Druckausgleichssystem eines Fahrzeugs (20) nach Anspruch 8.

10. Verfahren zum Steuern eines Thermomanagementsystems (10) nach einem der vorhergehenden Ansprüche für ein Fahrzeug (20), umfassend die Schritte:
- Verbinden (510) von mindestens einem Entgasungsrohr (110, 120) mit mindestens einem Entgasungsrohrende (115, 125) mit einem Entgasungsbehälter (200) mittels mindestens eines Anschlussstutzens (211, 221), wobei der mindestens eine Anschlussstutzen (211, 221) an einer Seitenwand (210) des Entgasungsbehälters (200) angeordnet ist;
- Verbinden (520) eines Füllrohrs (160) mit dem Entgasungsbehälter (200) mittels eines Füllstutzens (161), wobei der Füllstutzen (161) am Boden (260) des Entgasungsbehälters (200) angeordnet ist;
- Anordnen (530) des mindestens einen Entgasungsrohrendes (115, 125) unterhalb eines Grenzpegels (280) des Entgasungsbehälters (200) als Mindestfüllstand, um das Risiko des Ansaugens von Luft in den Entgasungsbehälter (200) zu verringern, und in einem ersten Abstand vom Füllstutzen (161) des Füllrohrs (160), so dass keine Luft in das mindestens eine Entgasungsrohr (110, 120) angesaugt wird;
- Anordnen von mindestens einer Drosseleinheit (112, 122) entlang des mindestens einen Entgasungsrohrs (110, 120); wobei die mindestens eine Drosseleinheit (112, 122) dazu eingerichtet ist, mindestens einen Entgasungsstrom im mindestens einen Entgasungsrohr bei einer Entgasungsdurchflussrate durch Festlegen einer Dimension der Drosselung zu begrenzen;
- Steuern der mindestens einen Drosseleinheit (112, 122) mittels einer Steuereinheit und Anpassen der Dimension der Drosselung, so dass der mindestens eine Entgasungsstrom im mindestens einen Entgasungsrohr (110, 120) in Abhängigkeit von einer Füllstromrate des Füllrohrs (160) und/oder einem Gasdruck im Entgasungsbehälter (200) und/oder einem Druck an einem Einlass eines mit dem mindestens einen Entgasungsrohr (110, 120) und/oder dem Füllrohr (160) verbundenen Pumpensystems (300) variiert.

11. Verfahren nach Anspruch 10, weiterhin umfassend die Schritte:
- Anordnen des zweiten Anschlussstutzens (221) an derselben Seite wie oder an einer gegenüberliegenden Seite zum ersten Anschlussstutzen (211) an der Seitenwand (210) des Entgasungsbehälters (200);
- Bereitstellen des mindestens einen Entgasungsrohrs (110, 120) mit einem ersten Entgasungsrohr (110) mit einem ersten Entgasungsrohrende (115) und einem zweiten Entgasungsrohr (120) mit einem zweiten Entgasungsrohrende (125);
- Verbinden des ersten Entgasungsrohrs (110) mit dem Entgasungsbehälter (200) mittels des ersten Anschlussstutzens (211) und/oder Verbinden des zweiten Entgasungsrohrs (120) mit dem Entgasungsbehälter (200) mittels des zweiten Anschlussstutzens (221); und
- Anordnen (540) des ersten Entgasungsrohrendes (115) in einem zweiten Abstand vom zweiten Entgasungsrohrende (125).

12. Computerprogrammprodukt für ein Thermomanagementsystem (10) nach einem der Ansprüche 1 bis 7, das, wenn es von einer Verarbeitungseinheit (25) eines Fahrzeugs (20) ausgeführt wird, dazu eingerichtet ist, die Verfahrensschritte eines der Verfahrensansprüche 10 bis 11 auszuführen.

## Revendications

1. Système de gestion thermique (10) pour un véhicule (20), comprenant :
au moins un tuyau de dégazage (110, 120) comprenant au moins une extrémité de tuyau de dégazage (115, 125),
un tuyau de remplissage (160) ;
au moins une unité de restriction (112, 122) ; et
une unité de commande ;
dans lequel ledit au moins un tuyau de dégazage (110, 120) est relié à un réservoir de dégazage (200) au moyen d'au moins un orifice de liaison (211, 221), ledit au moins un orifice de liaison (211, 221) étant agencé sur une paroi latérale (210) du réservoir de dégazage (200) ;
dans lequel le tuyau de remplissage (160) est relié au réservoir de dégazage (200) au moyen d'un orifice de remplissage (161), l'orifice de remplissage (161) étant agencé au fond du réservoir de dégazage (200) ;
dans lequel ladite au moins une extrémité de tuyau de dégazage (115, 125) est agencée en dessous d'un niveau limite (280) du réservoir de dégazage (200) en tant que niveau de remplissage minimal, afin de réduire un risque d'aspiration d'air dans le réservoir de dégazage (200) ; et
dans lequel ladite au moins une extrémité de tuyau de dégazage (115, 125) est agencée à une première distance de l'orifice de remplissage (161) du tuyau de remplissage (160), de sorte qu'aucun air ne doit être aspiré vers le bas dans ledit au moins un tuyau de dégazage (110, 120) ;
dans lequel ladite au moins une unité de restriction (112, 122) est agencée le long dudit au moins un tuyau de dégazage (110, 120) ;
dans lequel ladite au moins une unité de restriction (112, 122) est configurée pour restreindre au moins un flux de dégazage à l'intérieur dudit au moins un tuyau de dégazage à un débit de dégazage en réglant une dimension de la restriction ; et **caractérisé en ce que**
l'unité de commande est configurée pour commander ladite au moins une unité de restriction (112, 122) et pour ajuster la dimension de la restriction, de sorte que ledit au moins un flux de dégazage à l'intérieur dudit au moins un tuyau de dégazage (110, 120) varie en fonction d'un débit de remplissage du tuyau de remplissage (160) et/ou d'une pression de gaz à l'intérieur du réservoir de dégazage (200) et/ou d'une pression à une entrée d'un système de pompage (300) qui est relié audit au moins un tuyau de dégazage (110, 120) et/ou au tuyau de remplissage (160).

2. Système de gestion thermique (10) selon la revendication 1,
dans lequel le tuyau de remplissage (160) a une dimension plus grande que ledit au moins un tuyau de dégazage (110, 120).

3. Système de gestion thermique (10) selon la revendication 1 ou 2,
dans lequel ledit au moins un tuyau de dégazage (110, 120) comprend :
un premier tuyau de dégazage (110) comprenant une première extrémité de tuyau de dégazage (115), et
un second tuyau de dégazage (120) comprenant une seconde extrémité de tuyau de dégazage (125) ;
dans lequel le premier tuyau de dégazage (110) est relié au réservoir de dégazage (200) au moyen du premier orifice de liaison (211) ; et/ou
dans lequel le second tuyau de dégazage (120) est relié au réservoir de dégazage (200) au moyen du second orifice de liaison (221).

4. Système de gestion thermique (10) selon la revendication 3, comprenant en outre :
le réservoir de dégazage (200) comprenant le premier orifice de liaison (211) et/ou le second orifice de liaison (221) ;
le premier orifice de liaison (211) et/ou le second orifice de liaison (221) sont disposés dans la zone supérieure et/ou la zone inférieure de la paroi latérale (210) du réservoir de dégazage (200).

5. Système de gestion thermique (10) selon la revendication 3 ou 4,
dans lequel la première extrémité de tuyau de dégazage (115) est agencée à une seconde distance de la seconde extrémité de tuyau de dégazage (125).

6. Système de gestion thermique (10) selon la revendication 4 ou 5,
dans lequel le premier orifice de liaison (211) et le second orifice de liaison (221) sont agencés du même côté de la paroi latérale (210) du réservoir de dégazage (200) ; et
dans lequel le premier orifice de liaison (211) est agencé à une position plus basse sur la paroi latérale (210) que le second orifice de liaison (221).

7. Système de gestion thermique (10) selon la revendication 4 ou 5,
dans lequel le second orifice de liaison (221) est agencé sur un côté de la paroi latérale (210) opposé au premier orifice de liaison (211) ; et/ou
dans lequel le premier orifice de liaison (211) est agencé à une position sur la paroi latérale (210) plus basse ou plus haute que le second orifice de liaison (221).

8. Véhicule (20) comprenant un système de gestion thermique (10) selon l'une des revendications 1 à 7 précédentes.

9. Utilisation d'un système de gestion thermique (10) selon l'une des revendications 1 à 7 précédentes pour un système d'équilibrage fluidique et/ou de pression d'un véhicule (20) selon la revendication 8.

10. Procédé pour commander un système de gestion thermique (10) pour un véhicule (20) selon l'une des revendications 1 à 7, comprenant les étapes consistant à :
relier (510) au moins un tuyau de dégazage (110, 120) comprenant au moins une extrémité de tuyau de dégazage (115, 125) à un réservoir de dégazage (200) au moyen d'au moins un orifice de liaison (211, 221), ledit au moins un orifice de liaison (211, 221) étant agencé sur une paroi latérale (210) du réservoir de dégazage (200) ;
relier (520) un tuyau de remplissage (160) au réservoir de dégazage (200) au moyen d'un orifice de remplissage (161), l'orifice de remplissage (161) étant agencé au fond (260) du réservoir de dégazage (200) ;
agencer (530) ladite au moins une extrémité de tuyau de dégazage (115, 125) en dessous d'un niveau limite (280) du réservoir de dégazage (200) en tant que niveau de remplissage minimal, afin de réduire un risque d'aspiration d'air dans le réservoir de dégazage (200), et à une première distance de l'orifice de remplissage (161) du tuyau de remplissage (160), de sorte qu'aucun air n'est aspiré vers le bas dans ledit au moins un tuyau de dégazage (110, 120) ;
agencer au moins une unité de restriction (112, 122) le long dudit au moins un tuyau de dégazage (110, 120) ;
dans lequel ladite au moins une unité de restriction (112, 122) est configurée pour restreindre au moins un flux de dégazage à l'intérieur dudit au moins un tuyau de dégazage à un débit de dégazage en fixant une dimension de la restriction ;
commander ladite au moins une unité de restriction (112, 122) au moyen d'une unité de commande et ajuster la dimension de la restriction, de sorte que ledit au moins un flux de dégazage à l'intérieur dudit au moins un tuyau de dégazage (110, 120) varie en fonction d'un débit de remplissage du tuyau de remplissage (160) et/ou d'une pression de gaz à l'intérieur du réservoir de dégazage (200) et/ou d'une pression à une entrée d'un système de pompage (300) relié audit au moins un tuyau de dégazage (110, 120) et/ou au tuyau de remplissage (160).

11. Procédé selon la revendication 10, comprenant en outre les étapes consistant à :
agencer le second orifice de liaison (221) du même côté que le premier orifice de liaison (211) sur la paroi latérale (210) du réservoir de dégazage (200), ou sur un côté opposé à celui-ci ;
fournir ledit au moins un tuyau de dégazage (110, 120) avec un premier tuyau de dégazage (110) comprenant une première extrémité de tuyau de dégazage (115) et un second tuyau de dégazage (120) comprenant une seconde extrémité de tuyau de dégazage (125) ;
relier le premier tuyau de dégazage (110) au réservoir de dégazage (200) au moyen du premier orifice de liaison (211) et/ou relier le second tuyau de dégazage (120) au réservoir de dégazage (200) au moyen du second orifice de liaison (221) ; et
agencer (540) la première extrémité de tuyau de dégazage (115) à une seconde distance de la seconde extrémité de tuyau de dégazage (125).

12. Élément de programme informatique pour un système de gestion thermique (10) selon l'une quelconque des revendications 1 à 7, qui, lorsqu'il est exécuté par un élément de traitement (25) d'un véhicule (20), est adapté pour mettre en œuvre les étapes de procédé de l'une des revendications de procédé 10 à 11.
